# EUROPÄISCHE PATENTSCHRIFT

(11) **EP 3 366 855 B1**
(45) Veröffentlichungstag und Bekanntmachung des Hinweises auf die Patenterteilung: **01.04.2020**
(21) Anmeldenummer: 17157822.2
(22) Anmeldetag: 24.02.2017
(51) Int. Cl.: E04B 1/41, E04C 3/12, E04C 3/18, F16B 2/14, F16B 5/00, E04B 1/26

(54) **VORRICHTUNG ZUM KOPPELN ZWEIER VERTIKALBAUTEILE**
CONNECTOR, SUPPORT AND DEVICE FOR COUPLING VERTICAL COMPONENTS
ÉLÉMENT DE LIAISON, SUPPORT ET DISPOSITIF D'ACCOUPLEMENT DE COMPOSANTS VERTICAUX

(43) Veröffentlichungstag der Anmeldung: 29.08.2018
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- JP-A- 2005 076 318
- US-A- 3 585 771
- US-A- 5 050 366

## Beschreibung

Die vorliegende Erfindung betrifft eine Vorrichtung zum Koppeln zweier Vertikalbauteile, umfassend einen Träger aus Holz, insbesondere Brettschichtholz, und für jede Stirnseite des Trägers einen Verbinder zum Verbinden der Stirnseite mit jeweils einem der Vertikalbauteile, wobei jeder Verbinder zwei Beschläge, von denen der eine mit seiner einen Seite an einer Stirnseite des Trägers montiert und der andere mit seiner einen Seite am jeweiligen Vertikalbauteil montierbar ist und die Beschläge mit ihren jeweils anderen Seiten aneinander zur Anlage bringbar sind, sowie zwei Spannbacken hat, welche die Beschläge an diametralen Enden ergreifen und mittels zumindest eines etwa parallel zu den genannten anderen Seiten verlaufenden Spannelements gegeneinander spannbar sind.

Verbinder für derartige Vorrichtungen werden beispielsweise von der Firma Knapp GmbH, Euratsfeld, Österreich, unter der Marke Megant® vertrieben und eignen sich besonders zum Aufbau von Schwerlastverbindungen im Ingenieurholzbau, beispielsweise zum Verbinden von Stützen, Pfosten, Wänden oder ähnlichen Vertikalbauteilen mithilfe von Haupt-, Neben- und/oder Querträgern. Die Beschläge und Spannbacken sind dabei meist aus Metall, z.B. hochfestem Aluminium.

Die mit solchen Verbindern verwendeten Träger sind aus Holz, beispielsweise Brettschichtholz (BSH), insbesondere Leimbinder, sie haben eine bessere Hitze- und Feuerresistenz und bei gleicher Tragfestigkeit ein geringeres Gewicht als beispielsweise Stahlträger; allerdings sind Holzträger voluminöser. Die Vertikalbauteile, z.B. Wände, Stützen, Pfosten od.dgl., können ebenfalls aus Holz, aber auch aus Beton, Mauerwerk oder Metall sein.

Die Erfindung setzt sich zum Ziel, eine Vorrichtung zu schaffen, welche einfachen Aufbau und rasche Anwendbarkeit mit besonders hoher Belastbarkeit und Haltbarkeit in Bezug auf die Kopplung der Vertikalbauteile verbindet, sodass bei gleichem Gewicht oder gleicher Baugröße dauerhaft größere Kräfte aufgenommen werden können.

Dieses Ziel wird erfindungsgemäß mit einer Vorrichtung der einleitend genannten Art erreicht, welche sich dadurch auszeichnet, dass der Träger einen Untergurt aus Stahl hat, welcher Untergurt an jeder Stirnseite des Trägers an dem daran montierten Beschlag verankert ist, wobei zumindest ein Spannglied zum Spannen des Untergurts vorgesehen ist.

Der Untergurt aus Stahl verleiht dem Träger eine erhöhte Belastbarkeit bei gleichem Gewicht bzw. gleicher Baugröße. Durch die Verankerung des Untergurts an den an jeder Stirnseite des Trägers montierten Beschlägen ist eine Vormontage von Träger, montierten Beschlägen und Untergurt - wenn gewünscht auch unter Vorspannung - möglich, bevor die Vorrichtung in die für das Koppeln der Vertikalbauteile erforderliche, meist eingeschränkt zugängliche Stellung gebracht wird. Eine solche Vormontage kann beispielsweise auf einer Baustelle an einem bequem zugänglichen Ort oder sogar bereits werkseitig erfolgen. Das folgende gegeneinander Spannen der Beschläge mit den Spannbacken erfolgt in gewohnter Weise. Dabei entsteht eine Kopplung der Vertikalbauteile nicht bloß über den Holzträger, sondern zugleich über den Untergurt aus Stahl, was die möglichen aufnehmbaren Kräfte erhöht und bei gespanntem Untergurt ohne wesentliche Festigkeitseinbußen sogar ein Spiel zwischen Beschlägen und Spannbacken der Verbindung erlaubt, wie es manchmal unvermeidbar ist oder sich nach einiger Zeit einstellt. Eine solche Vorrichtung ermöglicht somit eine besonders dauerhafte, flexible und dadurch auch besonders erdbebensichere Kopplung der Vertikalbauteile.

Besonders günstig ist es, wenn der Untergurt durch zumindest ein Stahlseil oder durch zumindest einen Stab gebildet ist, wobei für jedes Stahlseil oder jeden Stab ein eigenes Spannglied vorgesehen ist. Holzträger mit Untergurten solcher Art sind beispielsweise aus den Schriften JP 2005 076318 A bzw. US 5 050 366 A bekannt. Stahlseile und Stäbe aus Stahl sind gleichermaßen in vielerlei zugfesten Ausführungsformen verfügbar, wobei Stahlseile aufgrund ihrer Flexibilität besonders einfach handhabbar und Stäbe steifer und besonders kostengünstig sind. Separate Spannglieder für jedes Stahlseil bzw. jeden Stab vereinfachen die Handhabung beim Spannen und den Aufbau der Vorrichtung.

Das Spannen des Untergurts kann beispielsweise mithilfe von Spannschlössern erfolgen. In einer besonders vorteilhaften Ausführungsform umfasst das Spannglied zumindest eine am Untergurt montierte Gewindemuffe und zumindest eine mit dem genannten Beschlag gekoppelte, mit der Gewindemuffe verschraubte Spannschraube. Dadurch kann mit geeigneten Spannschrauben sogar ein herkömmlicher Verbinder eingesetzt werden.

In einer besonders günstigen Variante hat der Träger zur Anlage des Spannglieds eine von seiner Unterseite zur Stirnseite verlaufende Fase. In dieser Fase kann beispielsweise das Spannglied räumlich aufgenommen und, wenn gewünscht, z.B. nachträglich zusammen mit dem Verbinder holzverkleidet werden, um ästhetische und/oder Brandschutz-Auflagen einfacher erfüllen zu können.

Um ferner eine vorgesehene Richtung der Krafteinleitung des gespannten Untergurts in den Beschlag zu erreichen, ist es besonders vorteilhaft, wenn die Spannschraube am Beschlag schräg verankert ist und die Fase einen dazu korrespondierenden Fasenwinkel hat. Das Spannglied kann so an der Fase anliegen.

Bevorzugt hat der Träger einen Kantenschutz für eine zwischen Unterseite und Fase gebildete Kante. Der Kantenschutz beugt einer Beschädigung des hölzernen Trägers durch den Untergurt aus Stahl und zugleich einem Verlust der Spannwirkung des Untergurts infolge eines Einkerbens des Trägers bzw. seiner Kante durch den Untergurt vor.

Zur Verbesserung des Brandwiderstandes ist es günstig, wenn der Untergurt in einer holzabgedeckten Nut an der Unterseite des Trägers aufgenommen ist.

In einer weiteren vorteilhaften Ausführungsform hat der Träger ferner an seiner Oberseite einen Obergurt aus Stahl, welcher an jeder Stirnseite des Trägers mit dem daran montierten Beschlag gekoppelt ist, wobei zumindest ein Spannglied zum Spannen des Obergurts vorgesehen ist. Der zusätzliche Obergurt bewirkt eine weitere Reduktion des Trägervolumens bei gleicher Festigkeit.

Aus den genannten Gründen hat der Träger bevorzugt zur Anlage des Spannglieds für den Obergurt eine von seiner Oberseite zur Stirnseite verlaufende Fase. Ferner ist es aus Brandschutzgründen günstig, wenn der Obergurt in einer holzabgedeckten Nut an der Oberseite des Trägers aufgenommen ist.

Bezüglich weiterer Ausführungsvarianten des Obergurts und deren Vorteile wird auf die obigen Ausführungen zum Untergurt verwiesen.

Die Erfindung wird nachfolgend anhand von in den beigeschlossenen Zeichnungen dargestellten Ausführungsbeispielen näher erläutert. In den Zeichnungen zeigen:
Fig. 1 Vorrichtungen gemäß dem Stand der Technik in einem an jeweils zwei Vertikalbauteile gekoppelten Zustand in einer Seitenansicht,
die Fig. 2a und 2b jeweils einen stirnseitigen Ausschnitt der erfindungsgemäßen Vorrichtung zum Koppeln zweier Vertikalbauteile mit einem Verbinder ohne (Fig. 2a) und mit (Fig. 2b) Träger in einer Perspektivansicht von schräg oben,
Fig. 3 den Ausschnitt der Vorrichtung von Fig. 2b in einem an einen Vertikalbauteil gekoppelten Zustand im Längsschnitt, und
Fig. 4 zwei Varianten der erfindungsgemäßen Vorrichtung in einem an jeweils zwei Vertikalbauteile gekoppelten Zustand im Längsschnitt.

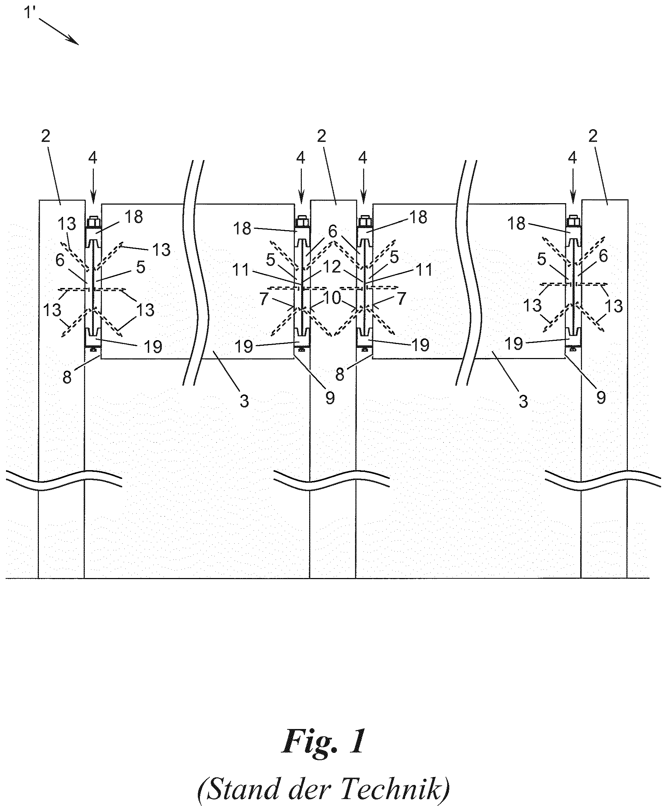

Fig. 1 zeigt eine Anordnung 1' gemäß dem Stand der Technik mit mehreren Vertikalbauteilen 2, z.B. Stützen, Pfosten oder Wänden, welche durch Träger 3 und daran jeweils stirnseitig montierte Verbinder 4 miteinander gekoppelt sind. Träger 3 und/oder Vertikalbauteile 2 können in der Folge weitere Bestandteile der Anordnung 1' tragen, z.B. eine Zwischendecke, eine Dachkonstruktion, usw. usf.

Die Vertikalbauteile 2 sind bevorzugt aus Holz, können jedoch alternativ z.B. aus Stahl, Mauerwerk oder Beton (mit und ohne Armierung) gefertigt sein. Die Träger 3, z.B. Haupt-, Neben- und/oder Querträgern bzw. Leimbinder, sind aus Holz, beispielsweise Brettschichtholz (BSH), die Verbinder 4 bevorzugt aus Metall, z.B. hochfestem Aluminium, gefertigt.

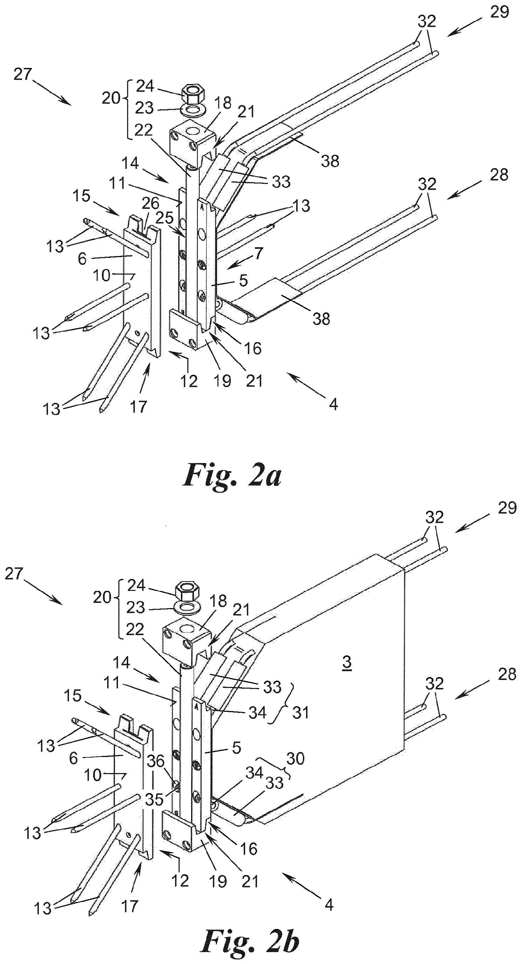

Gemäß dem Beispiel der Fig. 1 hat jeder Verbinder 4 zwei Beschläge 5, 6, von denen der eine Beschlag 5 mit seiner einen Seite 7 an einer Stirnseite 8, 9 des Trägers 3 montiert ist, und der andere Beschlag 6 mit seiner einen Seite 10 am Vertikalbauteil 2 montiert ist. Beim Verbinden des Trägers 3 mit dem Vertikalbauteil 2 sind die Beschläge 5, 6 mit ihren jeweils anderen Seiten 11, 12 aneinander zur Anlage gebracht (siehe auch die Fig. 2a und 2b).

Zur Montage der Beschläge 5, 6 am Träger 3 bzw. Vertikalbauteil 2 werden beispielsweise Schrauben 13, Nieten od. dgl. eingesetzt, von welchen je nach Belastungsrichtung optional zumindest eine schräg angeordnet sein kann. Im Beispiel von Fig. 1 - wie auch in jenen der Fig. 2a bis 4 - ist jeweils eine Schraube 13 schräg nach oben, eine etwa horizontal und eine schräg nach unten ausgerichtet. Es versteht sich, dass Schrauben 13 anderer Anzahl und Ausrichtungen möglich sind und insbesondere die beiden Beschläge 5, 6 eines Verbinders 4 Schrauben 13 unterschiedlicher Anzahl und/oder Ausrichtung haben können.

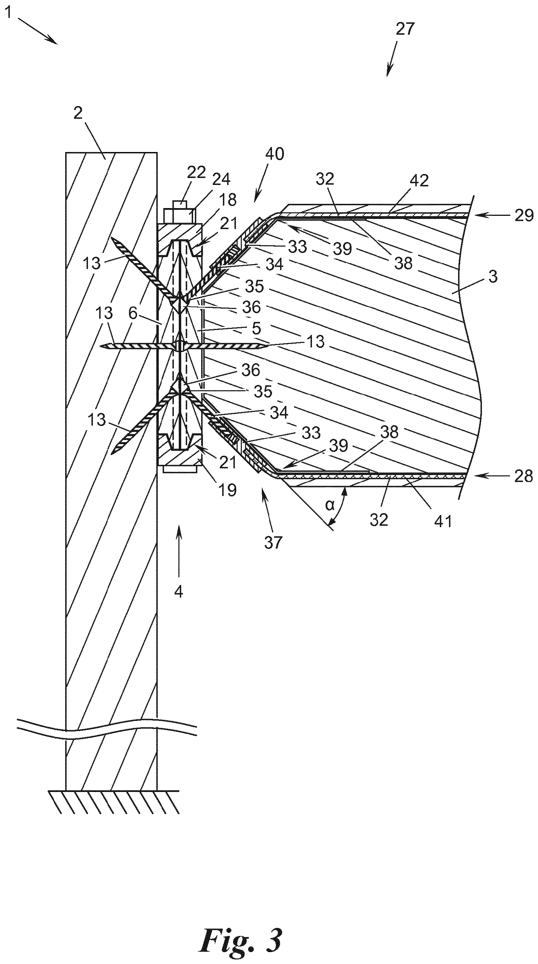

Die Beschläge 5, 6 werden an ihren diametralen Enden 14, 15, 16, 17 - hier: den oberen Enden 14, 15 und den unteren Enden 16, 17 - von zwei Spannbacken 18, 19 ergriffen und beim Verbinden des Trägers 3 mit dem Vertikalbauteil 2 mittels zumindest eines Spannelements 20, welches etwa parallel zu den genannten anderen Seiten 11, 12 der Beschläge 5, 6 verläuft, unter Zugspannung gebracht, d.h. gegeneinander gespannt, wie auch in den Fig. 2a, 2b und 3 gezeigt ist. Jeder Spannbacken 18, 19 hat eine Keilnut 21 zur Aufnahme der aneinander anliegenden, dazu komplementär keilförmig ausgestalteten Enden 14, 15, 16, 17 der Beschläge 5, 6. Durch Gegeneinanderspannen der Spannbacken 18, 19 werden somit die Beschläge 5, 6 mit ihren genannten anderen Seiten 11, 12 aneinander angepresst.

Als Spannelement 20 kommt beispielsweise eine Gewindestange 22 in Frage, welche in bekannter Weise z.B. mit Unterlegscheibe 23 und Mutter 24 spannbar ist. Die Gewindestange 22 des zumindest einen Spannelements 20 ist optional in einander zugewandten Halbkehlen 25, 26 (Fig. 2a, 2b) der genannten anderen Seiten 11, 12 der Beschläge 5, 6 aufgenommen.

Anhand der in den Fig. 2a bis 4 dargestellten Beispiele wird in der Folge eine Anordnung 1 mit einer erfindungsgemäßen Vorrichtung 27 zum Koppeln zweier Vertikalbauteile 2 erläutert, wobei gleiche oder vergleichbare Elemente zum einfacheren Verständnis gleiche Bezugszeichen wie in Fig. 1 haben.

Bei der erfindungsgemäßen Vorrichtung 27 haben die Träger 3 zur Erhöhung der Stabilität einen Untergurt 28 aus Stahl und einen optionalen Obergurt 29 ebenfalls aus Stahl, welche jeweils an den an jeder Stirnseite 8, 9 des Trägers 3 montierten Beschlägen 5 verankert sind. Dadurch sind ferner die Vertikalbauteile 2 beiderseits des Trägers 3 miteinander über die Verbinder 4 gekoppelt. Zum Spannen des Untergurts 28 ist zumindest ein Spannglied 30 - und zum Spannen des Obergurts 29, falls vorhanden, zumindest ein Spannglied 31 - vorgesehen. Der Untergurt 28 - wie auch der optionale Obergurt 29 - ist durch zumindest ein Stahlseil 32 oder durch zumindest einen Stab gebildet.

Im Beispiel der Fig. 2a und 2b sind Unter- und Obergurte 28, 29 jeweils durch zwei Stahlseile 32 gebildet. Für jedes Stahlseil 32 bzw. jeden Stab ist dabei ein eigenes Spannglied 30, 31 vorgesehen; alternativ könnte auch jeweils ein gemeinsames Spannglied 30, 31 für alle Stahlseile 32 bzw. Stäbe des Untergurts 28 oder des Obergurts 29 vorgesehen werden.

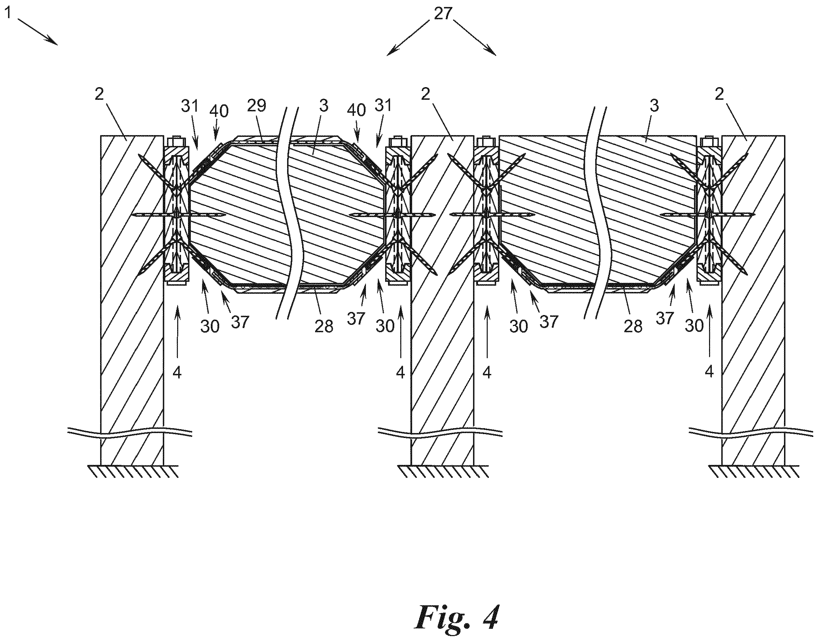

Spannglieder 30 können im Bereich bloß einer Stirnseite 8 des Trägers 3, d.h. bloß an einem stirnseitigen Ende des Untergurts 28, vorgesehen sein und dabei der Untergurt 28 am Beschlag 5, welcher an der anderen Stirnseite 9 des Trägers 3 montiert ist, fest verankert sein; alternativ kann ein Spannglied 30 an beliebiger anderer Stelle, z.B. etwa in der Mitte des Untergurts 28, vorgesehen und dabei der Untergurt 28 an den an beiden Stirnseiten 8, 9 des Trägers 3 montierten Beschlägen 5 fest verankert sein. In den Beispielen der Fig. 4 ist der Untergurt 28 an beiden Stirnseiten 8,9 des Trägers 3 über jeweils ein Spannglied 30 am jeweiligen Beschlag 8 verankert.

In den Beispielen der Fig. 2a bis 4 umfasst das Spannglied 30 zumindest eine am Untergurt 28 montierte Gewindemuffe 33 und zumindest eine Spannschraube 34, welche einerseits mit dem an der Stirnseite 8, 9 des Trägers 3 montierten Beschlag 5 gekoppelt und andererseits mit der Gewindemuffe 33 verschraubt ist. Die genannte Kopplung der Spannschraube 34 an den Beschlag 5 erfolgt dabei durch einen Kopf 35 der Spannschraube 34, welcher in einer Bohrung 36 des Beschlags 5 zurückgehalten ist. Die Bohrung 36 ist vorzugsweise eine Stufen- oder Senkbohrung, sodass der Schraubenkopf 35 an der genannten anderen Seite 11 des Beschlags 5 nicht hervorragt.

Alternativ zu Gewindemuffe 33 und Spannschraube 34 kann das Spannglied 30 in anderer, dem Fachmann bekannter Weise ausgeführt sein, beispielsweise als Spannschloss oder durch ein Außengewinde am Untergurt - z.B. in einer Ausführung als Stab mit Gewinden an seinen Enden - mit einer komplementären, am Beschlag 5 verankerten Gewindehülse.

Die Unterseite - und ebenso die Oberseite - des Trägers 3 kann ein- oder beidseitig in rechtem Winkel an die jeweilige Stirnseite 8, 9 grenzen, wie im rechtsseitigen Beispiel von Fig. 4 für die Oberseite des Trägers 3 gezeigt ist, und dabei ferner der Untergurt 28 an der gesamten Unterseite des Trägers 3 gerade verlaufen und optional ebenfalls in rechtem Winkel am Beschlag 5 verankert sein.

In den Beispielen der Fig. 2a bis 4 hat hingegen der Träger 3 an einer oder beiden seiner Stirnseiten 8, 9 zur Anlage des Spannglieds 30 eine von seiner Unterseite zur Stirnseite 8 verlaufende Fase 37. Die Fase 37 bewirkt einerseits eine Umlenkung des Untergurts 28 und damit der auf den Träger 3 bzw. den Beschlag 5 wirkenden Kraftrichtung, welche über Gestaltung des Fasenwinkels α (Fig. 3) - und der Bohrung 36 durch den Beschlag 5 - den Erfordernissen angepasst werden kann. Andererseits kann der Fasenwinkel α an die Verwendung eines bereits vorhandenen Beschlags 5 bzw. Verbinders 4 angepasst werden, indem der Fasenwinkel α zur schräg am vorhandenen Beschlag 5 verankerten Spannschraube 34 korrespondierend ausgeführt wird.

Optional hat der Träger 3 einen Kantenschutz 38, z.B. aus Blech oder einem Kunst- oder Verbundstoff mit guten Gleiteigenschaften, welcher zumindest jene Kante 39, die sich zwischen Unterseite des Trägers 3 und Fase 37 bildet, gegen ein Einkerben durch den Untergurt 28 schützt und dessen Gleiten beim Spannen erleichtert. Der Kantenschutz 38 kann dazu optional schmäler als der Träger 3 selbst sein und dabei die Kante 39 z.B. nur im Bereich des Untergurts 28 bedecken. Wenn gewünscht, kann der Kantenschutz 38 wie in den Beispielen der Fig. 2a bis 4 von der Unterseite des Trägers 3 über die Fase 37 und die Stirnseite 8 bis zur Oberseite des Trägers 3 verlaufen.

Die obigen Ausführungen hinsichtlich der Varianten des Untergurts 28, des Spannglieds 30 und der Fase 37 an der Unterseite des Trägers 3 gelten gemäß den Beispielen der Fig. 2a bis 4 gleichermaßen für den Obergurt 29, dessen Spannglied(er) 31, sowie eine optionale Fase 40 an der Oberseite des Trägers 3.

Ferner können Unter- und/oder Obergurt 28, 29, wenn z.B. aus ästhetischen Gründen oder zur Verbesserung des Brandwiderstands gewünscht, in einer holzabgedeckten Nut 41 bzw. 42 an der Unter- bzw. Oberseite des Trägers 3 aufgenommen sein.

Die Erfindung ist nicht auf die dargestellten Ausführungsformen beschränkt, sondern umfasst alle Varianten, Modifikationen und Kombinationen, die in den Schutzumfang der angeschlossenen Ansprüche fallen.

## Patentansprüche

1. Vorrichtung zum Koppeln zweier Vertikalbauteile, umfassend
einen Träger (3) aus Holz, insbesondere Brettschichtholz, und
für jede Stirnseite (8, 9) des Trägers (3) einen Verbinder (4) zum Verbinden der Stirnseite (8, 9) mit jeweils einem der Vertikalbauteile (2), wobei jeder Verbinder (4)
zwei Beschläge (5, 6), von denen der eine (5) mit seiner einen Seite (7) an einer Stirnseite (8) des Trägers (3) montiert und der andere (6) mit seiner einen Seite (10) am jeweiligen Vertikalbauteil (2) montierbar ist und die Beschläge (5, 6) mit ihren jeweils anderen Seiten (11, 12) aneinander zur Anlage bringbar sind, sowie
zwei Spannbacken (18, 19) hat, welche die Beschläge (5, 6) an diametralen Enden (14, 15, 16, 17) ergreifen und mittels zumindest eines etwa parallel zu den genannten anderen Seiten (11, 12) verlaufenden Spannelements (20) gegeneinander spannbar sind,
**dadurch gekennzeichnet, dass**
der Träger (3) einen Untergurt (28) aus Stahl hat, welcher Untergurt (28) an jeder Stirnseite (8, 9) des Trägers (3) an dem daran montierten Beschlag (5) verankert ist, wobei zumindest ein Spannglied (30) zum Spannen des Untergurts (28) vorgesehen ist.

2. Vorrichtung nach Anspruch 1, **dadurch gekennzeichnet, dass** der Untergurt (28) durch zumindest ein Stahlseil (32) oder durch zumindest einen Stab gebildet ist, wobei für jedes Stahlseil (32) oder jeden Stab ein eigenes Spannglied (30) vorgesehen ist.

3. Vorrichtung nach Anspruch 1 oder 2, **dadurch gekennzeichnet, dass** das Spannglied (30) zumindest eine am Untergurt (28) montierte Gewindemuffe (33) und zumindest eine mit dem genannten Beschlag (5) gekoppelte, mit der Gewindemuffe (33) verschraubte Spannschraube (34) umfasst.

4. Vorrichtung nach einem der Ansprüche 1 bis 3, **dadurch gekennzeichnet, dass** der Träger (3) zur Anlage des Spannglieds (30) eine von seiner Unterseite zur Stirnseite (8, 9) verlaufende Fase (37) hat.

5. Vorrichtung nach den Ansprüchen 3 und 4, **dadurch gekennzeichnet, dass** die Spannschraube (34) am Beschlag (5) schräg verankert ist und die Fase (37) einen dazu korrespondierenden Fasenwinkel (α) hat.

6. Vorrichtung nach Anspruch 4 oder 5, **dadurch gekennzeichnet, dass** der Träger (3) einen Kantenschutz (38) für eine zwischen Unterseite und Fase (37) gebildete Kante hat.

7. Vorrichtung nach einem der Ansprüche 1 bis 6, **dadurch gekennzeichnet, dass** der Untergurt (28) in einer holzabgedeckten Nut (41) an der Unterseite des Trägers (3) aufgenommen ist.

8. Vorrichtung nach einem der Ansprüche 1 bis 7, **dadurch gekennzeichnet, dass** der Träger (3) ferner an seiner Oberseite einen Obergurt (29) aus Stahl hat, welcher an jeder Stirnseite (8, 9) des Trägers (3) mit dem daran montierten Beschlag (5) gekoppelt ist, wobei zumindest ein Spannglied (31) zum Spannen des Obergurts (29) vorgesehen ist.

9. Vorrichtung nach Anspruch 8, **dadurch gekennzeichnet, dass** der Träger (3) zur Anlage des Spannglieds (31) für den Obergurt (29) eine von seiner Oberseite zur Stirnseite (8, 9) verlaufende Fase (40) hat.

10. Vorrichtung nach Anspruch 8 oder 9, **dadurch gekennzeichnet, dass** der Obergurt (29) in einer holzabgedeckten Nut (42) an der Oberseite des Trägers (3) aufgenommen ist.

## Claims

1. Apparatus for coupling two vertical components, comprising
a support (3) made of wood, particularly glued laminated timber, and
for each face side (8, 9) of the support (3) a connector (4) for connecting the face side (8, 9) with a respective one of the vertical components (2), wherein each connector (4) has
two fittings (5, 6), of which one (5) is mounted with its one side (7) on a face side (8) of the support (3) and the other one (6) can be mounted with its one side (10) on the respective vertical component (2), wherein the fittings (5, 6) can be brought into abutment with their respective other sides (11, 12), as well as
two clamping jaws (18, 19) which grasp the fittings (5, 6) on diametrical ends (14, 15, 16, 17) and can be clamped against one another by means of at least one tensioning element (20) running approximately parallel to said other sides (11, 12),
**characterised in that**
the support (3) has a lower chord (28) made of steel, which lower chord (28) is anchored on each face side (8, 9) of the support (3) on the fitting (5) mounted thereon, wherein at least one tensioning member (30) is provided for tensioning the lower chord (28).

2. Apparatus according to claim 1, **characterised in that** the lower chord (28) is formed by at least one steel cable (32) or by at least one rod, wherein for each steel cable (32) or each rod a separate tensioning member (30) is provided.

3. Apparatus according to claim 1 or 2, **characterised in that** the tensioning member (30) comprises at least one screw socket (33) mounted on the lower chord (28) and at least one tensioning screw (34) coupled with said fitting (5) and screwed together with the screw socket (33).

4. Apparatus according to any one of claims 1 to 3, **characterised in that** the support (3) has a chamfer (37) running from its lower side to the face side (8, 9) for abutment of the tensioning member (30).

5. Apparatus according to claims 3 and 4, **characterised in that** the tensioning screw (34) is anchored obliquely on the fitting (5) and the chamfer (37) has a chamfer angle (α) corresponding thereto.

6. Apparatus according to claim 4 or 5, **characterised in that** the support (3) has an edge protection (38) for an edge formed between the lower side and the chamfer (37).

7. Apparatus according to any one of claims 1 to 6, **characterised in that** the lower chord (28) is received in a wood-covered groove (41) on the lower side of the support (3).

8. Apparatus according to any one of claims 1 to 7, **characterised in that** the support (3) further has on its upper side an upper chord (29) made of steel, which is coupled on each face side (8, 9) of the support (3) with the fitting (5) mounted thereon, wherein at least one tensioning member (31) is provided for tensioning the upper chord (29).

9. Apparatus according to claim 8, **characterised in that** the support (3) has a chamfer (40) running from its upper side to the face side (8, 9) for abutment of the tensioning member (31) for the upper chord (29).

10. Apparatus according to claim 8 or 9, **characterised in that** the upper chord (29) is received in a wood-covered groove (42) on the upper side of the support (3).

## Revendications

1. Dispositif de couplage de deux composants verticaux, comprenant
un support (3) en bois, notamment en bois lamellé-collé, et
un connecteur (4) pour chaque côté frontal (8, 9) du support (3) pour relier le côté frontal (8, 9) avec un des composants verticaux (2) respectif, où chaque connecteur (4) a
deux ferrures (5, 6), parmi lesquels l'une (5) est montée avec un de ses côtés (7) sur un côté frontal (8) du support (3) et l'autre (6) peut être montée avec un de ses côtés (10) sur le composant vertical (2) respectif, où et les ferrures (5, 6) peuvent être mises en appui l'une contre l'autre avec leurs autres côtés respectifs (11, 12), ainsi que
deux mâchoires de serrage (18, 19), lesquelles prennent en prise les ferrures (5, 6) au niveau d'extrémités diamétrales (14, 15, 16, 17) et peuvent être serrées l'une contre l'autre au moyen d'au moins un élément de serrage (20) s'étendant à peu près parallèlement par rapport aux dits autres côtés (11, 12),
**caractérisé en ce que**
le support (3) a un tirant inférieur (28) en acier, lequel tirant inférieur (28) est ancré au niveau de chaque côté frontal (8, 9) du support (3) à la ferrure (5) y étant montée, où au moins un organe de serrage (30) est prévu pour le serrage du tirant inférieur (28).

2. Dispositif selon la revendication 1, **caractérisé en ce que** le tirant inférieur (28) est formé par au moins un câble en acier (32) ou par au moins une barre, où pour chaque câble en acier (32) ou chaque barre, il est prévu un organe de serrage (30) individuel.

3. Dispositif selon la revendication 1 ou 2, **caractérisé en ce que** l'organe de serrage (30) comprend au moins un manchon fileté (33) monté sur le tirant inférieur (28) et au moins une vis de serrage (34) couplée avec ladite ferrure (5) et vissée avec le manchon fileté (33).

4. Dispositif selon l'une des revendications 1 à 3, **caractérisé en ce que** le support (3) a un chanfrein (37) s'étendant à partir de son côté inférieur jusqu'au côté frontal (8, 9) pour l'appui de l'organe de serrage (30).

5. Dispositif selon les revendications 3 et 4, **caractérisé en ce que** la vis de serrage (34) est ancrée de manière inclinée dans la ferrure (5), et le chanfrein (37) a un angle de chanfrein (α) lui correspondant.

6. Dispositif selon la revendication 4 ou 5, **caractérisé en ce que** le support (3) a une protection d'arête (38) pour une arête formée entre le côté inférieur et le chanfrein (37).

7. Dispositif selon l'une des revendications 1 à 6, **caractérisé en ce que** le tirant inférieur (28) est reçu dans une rainure (41) recouverte de bois au niveau du côté inférieur du support (3).

8. Dispositif selon l'une des revendications 1 à 7, **caractérisé en ce que** le support (3) a en outre un tirant supérieur (29) en acier au niveau de son côté supérieur, lequel tirant supérieur (29) est couplé au niveau de chaque côté frontal (8, 9) du support (3) avec la ferrure (5) qui y est montée, où au moins un organe de serrage (31) est prévu pour le serrage du tirant supérieur (29).

9. Dispositif selon la revendication 8, **caractérisé en ce que** le support (3) a un chanfrein (40) s'étendant à partir de son côté supérieur jusqu'au côté frontal (8, 9) pour l'appui de l'organe de serrage (31) destiné au tirant supérieur (29).

10. Dispositif selon la revendication 8 ou 9, **caractérisé en ce que** le tirant supérieur (29) est reçu dans une rainure (42) recouverte de bois au niveau du côté supérieur du support (3).
